# EUROPÄISCHE PATENTSCHRIFT

(11) **EP 0 527 140 B1**
(45) Veröffentlichungstag und Bekanntmachung des Hinweises auf die Patenterteilung: **05.07.1995**
(21) Anmeldenummer: 91906555.7
(22) Anmeldetag: 05.04.1991
(51) Int. Cl.: F16K 31/06

(54) **FORMSCHLÜSSIGE VERBINDUNG EINES MAGNETVENTILES MIT EINEM GEHÄUSEBLOCK SOWIE VERFAHREN ZUM HERSTELLEN EINER FORMSCHLÜSSIGEN VERBINDUNG**
POSITIVELY LOCKING CONNECTION FOR JOINING A SOLENOID VALVE TO A CASING BLOCK, AND METHOD OF MANUFACTURING THE CONNECTION
ASSEMBLAGE PAR LIAISON DE FORME D'UNE ELECTROVANNE AVEC UN BLOC-CARTER, AINSI QUE PROCEDE POUR SA REALISATION

(30) Priorität: 30.04.1990 DE 4013876
(43) Veröffentlichungstag der Anmeldung: 17.02.1993
(73) Patentinhaber: ROBERT BOSCH GMBH, 70442 Stuttgart (DE)
(72) Erfinder: KÄS, Günter, D-7000 Stuttgart 40 (DE); ALAZE, Norbert, D-7145 Markgröningen (DE)
(86) Internationale Anmeldenummer: DE9100288
(87) Internationale Veröffentlichungsnummer: WO9117378

(56) Entgegenhaltungen:
- DE-A- 3 810 581
- GB-A- 2 131 906

## Beschreibung

### Stand der Technik

Die Erfindung geht aus von einer formschlüssigen Verbindung eines Magnetventiles mit einem Gehäuseblock nach der Gattung des Patentanspruchs 1. Die Erfindung betrifft auch ein Verfahren zum Herstellen einer formschlüssigen Verbindung gemäß Patentanspruch 7.

Magnetventile werden vielfach beim Einfügen in eine Aufnahmebohrung mit in diese Bohrung einmündenden Druckmittelzuführungen und -ableitungen kontaktiert. Auf die montierten Magnetventile wirken daher durch das Druckmittel ausgeübte hohe Kräfte, welche vom Gehäuseblock aufgenommen werden müssen. Die üblicherweise durch Einschrauben der Magnetventile in den Gehäuseblock oder durch mit diesem verbundene Niederhalteplatten erzielten formschlüssigen Verbindungen müssen daher sehr großen Belastungen wiederstehen, insbesondere wenn es sich um Magnetventile von hydraulischen Fahrzeugbremsanlagen handelt. Derartige Verbindungen sind daher nicht nur konstruktiv aufwendig gestaltet, sie sind beim Zusammenfügen auch nur mit relativ hohem Zeitaufwand herstellbar.

So ist es beispielsweise aus der DE-A-38 10 581 bekannt, zwei parallel zueinander angeordnete Anschlußplatten mit Druckmittel führenden Kanälen zu versehen, ein oder mehrere Magnetventile zwischen den Anschlußplatten anzuordnen und diese mit Zugankerschrauben zusammenzuspannen.

Desweiteren ist es aus der DE-A-38 10 581 bekannt, einen Druckmittel führenden, endseitig aufgeweiteten Hülsenabschnitt eines Magnetventils in einer Bohrung eines Gehäuseblocks aus Stahl aufzunehmen und den Öffnungsrand der Bohrung gegen den Hülsenabschnitt zu verstemmen. Eine solche formschlüssige Verbindung ist teuer in der Herstellung und hinsichtlich der Dichtheit problematisch.

Der Erfindung liegt daher die Aufgabe zugrunde, eine hochbelastbare Verbindung zwischen einem Magnetventil und einem Gehäuseblock herzustellen, welche vom Werkstoff des Gehäuseblocks weitgehend unabhängig und von hoher Präzision ist.

### Vorteile der Erfindung

Die erfindungsgemäße formschlüssige Verbindung mit den kennzeichnenden Merkmalen des Patentanspruchs 1 hat demgegenüber den Vorteil, daß sie in wenigen Arbeitsschritten mit geringem Zeitbedarf herstellbar ist, nämlich durch Einfügen des Magnetventils in die Aufnahmebohrung, Überstreifen der Hülse über das Magnetventil und Einpressen der Hülse in den Spalt. Diese Arbeitsschritte sind kostengünstig mit Montageautomaten ausführbar. Die Verbindung zentriert das Magnetventil und ist fähig, sehr hohe axiale Kräfte aufzunehmen, welche das Magnetventil aus der Aufnahmebohrung auszustoßen versuchen. Außerdem ist die Herstellung der Verbindung leicht kontrollierbar durch Messen der Einpreßtiefe der Hülse.

Durch die in den Unteransprüchen aufgeführten Maßnahmen sind vorteilhafte Weiterbildungen und Verbesserungen der im Hauptanspruch angegebenen formschlüssigen Verbindung möglich.

Mit der im Anspruch 2 angegebenen Bemessung werden einerseits die Umformkräfte am in die Hinterschneidung eingreifenden Hülsenbereich niedrig gehalten, andererseits wird eine relativ große Querschnittsfläche im verformten Hülsenbereich erzeugt, welche Scherkräfte aufzunehmen vermag, die durch am Magnetventil angreifende Ausstoßkräfte hervorgerufen werden.

Große Scherkräfte können von der Hülse aufgenommen werden, wenn die Maßnahme gemäß Anspruch 3 getroffen wird.

Bei der im Anspruch 4 gekennzeichneten Ausgestaltung lassen sich Kostenvorteile bei der Herstellung der Hülse erzielen, insbesondere wenn eine Verbindung der Bandenden entbehrlich ist. Darüber hinaus vermag sich eine derart geschlitzte Hülse Durchmessertoleranzen der Aufnahmebohrung anzugleichen.

Mit der Weiterbildung gemäß Anspruch 5 ist die Ausführung der Verbindung durch Sicht- und Maßkontrolle in einfacher Weise zu prüfen.

Die im Anspruch 6 offenbarte Maßnahme erlaubt ein Trennen der formschlüssigen Verbindung mit einfachen Mitteln, wenn das Magnetventil z. B. ausgetauscht werden soll.

Das im Anspruch 7 angegebene Verfahren zeichnet sich dadurch aus, daß die einfach geformten Bauteile Magnetventil und Gehäuseblock in wenigen Schritten miteinander zu einer axial hochbelastbaren Verbindung zusammenfügbar sind. Dabei unterliegen die beiden Bauteile keiner Umformung und keinen stoßartig auftretenden Kräften.

### Zeichnung

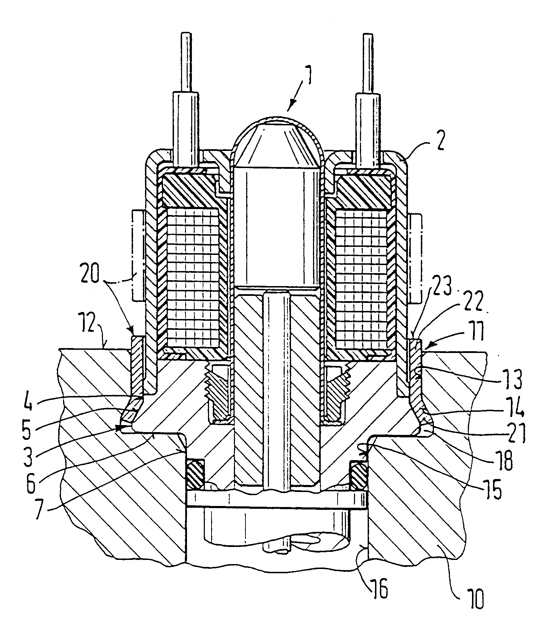

Ein Ausführungsbeispiel der Erfindung ist in der Zeichnung vereinfacht dargestellt und in der nachfolgenden Beschreibung näher erläutert.

### Beschreibung des Ausführungsbeispiels

Das in der Zeichnung dargestellte Ausführungsbeispiel einer formschlüssigen Verbindung zeigt ein Magnetventil 1, welches zur Verwendung in einer nicht dargestellten hydraulischen Fahrzeugbremsanlage bestimmt ist. Das Magnetventil 1 weist eine zylindrische Mantelhülse 2 auf, die auf einen Ventilkörperabschnitt 3 aufgepreßt ist. Dieser besitzt einen an die Mantelhülse 2 angrenzenden zylindrischen Abschnitt 4 geringer axialer Länge, welcher mit abgerundetem Übergang in einen kegelförmigen Abschnitt 5 übergeht. Dieser Abschnitt 5 hat einen Kegelwinkel, d. h. einen Winkel zwischen seiner Mantellinie und einer Ventillängsachse, von 30°. Nach dem größten Durchmesser des kegelförmigen Abschnitts 5 geht dieser in einen Rücksprung mit radial verlaufender Stirnfläche 6 über. An diese schließt sich ein im Durchmesser kleinerer, zylindrischer Ventilkörperbereich 7 an.

Das Magnetventil 1 sitzt in einem nur teilweise dargestellten Gehäuseblock 10 aus Aluminium. Der Gehäuseblock 10 hat eine Aufnahmebohrung 11, welche von einer Stirnfläche 12 des Gehäuseblocks mit einem zylindrischen Bohrungsabschnitt 13 ausgeht. Die Aufnahmebohrung 11 geht angrenzend an den zylindrischen Bohrungsabschnitt 13 mit zunehmender Bohrungstiefe in eine Hinterschneidung 14 über, d. h. in eine radiale Erweiterung der Bohrung 11. Die Hinterschneidung 14 hat Kegelform mit einem Kegelwinkel gleicher Größe wie ihn der kegelförmige Abschnitt 5 des Ventilkörperabschnitts 3 besitzt. Die Hinterschneidung 14 ist durch eine radial verlaufende Bohrungsstufe 15 begrenzt. Anschließend an diese ist die Aufnahmebohrung 11 mit einem dem Ventilkörperbereich 7 angepaßten Bohrungsabschnitt 16 fortgesetzt.

Der im Bereich des kegelförmigen Abschnitts liegende, größte Durchmesser des Ventilkörperabschnitts 3 ist kleiner als der Öffnungsdurchmesser des zylindrischen Bohrungsabschnitts 13 in der Aufnahmebohrung 11. Das Magnetventil 1 ist daher von der Stirnfläche 12 des Gehäuseblocks 10 her in die Aufnahmebohrung 11 einführbar. Dabei greift der Ventilkörperbereich 7 passend in den Bohrungsabschnitt 16 ein. Die Einstecktiefe des Magnetventils 1 ist durch Angriff des Ventilkörperabschnitts 3 an der Bohrungsstufe 15 begrenzt. Da der Ventilkörperabschnitt 3 eine der Aufnahmebohrung 11 angepaßte, ähnliche Querschnittsform hat, bleibt bei an der Bohrungsstufe 15 abgestütztem Ventilkörperabschnitt 3 ein umlaufender Spalt 18 gleicher Breite zwischen den maßlich entsprechend aufeinander abgestimmten beiden Teilen. In den Spalt 18 zwischen der Aufnahmebohrung 11 und dem Ventilkörperabschnitt 3 ist eine diesen füllende, in den Bereich der Hinterschneidung 14 eingreifende Hülse 20 eingepreßt.

Die Hülse 20 besteht aus metallischem Werkstoff, vorzugsweise Stahl. Sie kann aus Bandmaterial gerollt sein, dessen Enden mit geringem Abstand aneinandergrenzen. Die Hülse 20 kann jedoch auch ein Abschnitt eines Rohres sein. Wie in der Zeichnung mit strichpunktierten Linien angedeutet, wird die Hülse 20 nach dem Einfügen des Magnetventils 1 in den Gehäuseblock 10 über die Mantelhülse 2 gestreift und mit einem geeigneten, nicht dargestellten Preßwerkzeug in den Spalt 18 zwischen dem Ventilkörperabschnitt 3 und der Aufnahmebohrung 11 eingepreßt. Beim Auftreffen der Hülse 20 auf den kegelförmigen Abschnitt 5 des Ventilkörperabschnitts 3 unterliegt deren Bereich 21 einer Umformung im Sinne einer plastischen Aufweitung. Der Einpreßvorgang findet seinen Abschluß, wenn die Hülse 20 den Spalt 18 im Bereich der Hinterschneidung 14 ausfüllt. Durch entsprechende Bemessung des Spaltes 18 und der Hülse 20 wird eine spielfreie axiale und radiale Fixierung des Magnetventils 1 in der Aufnahmebohrung 11 des Gehäuseblocks 10 erzielt. Am Vorhandensein eines über die Stirnfläche 12 des Gehäuseblocks 10 vorstehenden Abschnitts 22 der Hülse 20 sowie durch Kontrolle des Abstandsmaßes zwischen der Stirnfläche 12 des Gehäuseblocks 10 und der oberen, freien Stirnfläche 23 der Hülse 20 ist leicht die Qualität der formschlüssigen Verbindung zwischen dem Magnetventil 1 und dem Gehäuseblock 10 überprüfbar.

Für Demontagezwecke kann der vorstehende Abschnitt 22 der Hülse 20 einen größeren Überstand über die Stirnfläche 12 des Gehäuseblocks 10 aufweisen als dargestellt. Für den Angriff eines nicht gezeichneten Ausziehwerkzeugs am vorstehenden Abschnitt 22 kann dieser mit mehreren, über den Umfang verteilten Bohrungen versehen sein, in welche das Ausziehwerkzeug eingreifen und die Hülse 20 aus dem Spalt 18 ziehen kann. Das Magnetventil 1 ist dann aus der Aufnahmebohrung 11 des Gehäuseblocks 10 entnehmbar.

Anstelle der erwähnten Werkstoffe für den Ventilkörperabschnitt 3, den Gehäuseblock 10 und die Hülse 20 können auch andere geeignete Materialien Verwendung finden. Auch kann der die Hinterschneidung 14 bestimmende Kegelwinkel einen anderen Wert haben, beispielsweise bis 60° betragen. Vorzugsweise wird man jedoch einen Kegelwinkel zwischen 5° und 30° wählen, um günstige Verhältnisse beim Umformvorgang der Hülse 20 im Spalt 18 sowie der gewünschten Rückhaltekraft gegen Ausstoßen des Magnetventils 1 aus der Aufnahmebohrung 11 zu erzielen.

## Patentansprüche

1. Formschlüssige Verbindung eines Magnetventiles (1) mit einem Gehäuseblock (10) mit einer Aufnahmebohrung (11) für einen in dieser axial und radial fixierten Ventilkörperabschnitt (3), wobei der größte Durchmesser des Ventilkörperabschnitts (3) kleiner ist als der Öffnungsdurchmesser der Aufnahmebohrung (11),
gekennzeichnet durch die Merkmale:
die Aufnahmebohrung (11) geht angrenzend an einen zylindrischen Bohrungsabschnitt (13) mit zunehmender Bohrungstiefe in eine Hinterschneidung (14) über;
der Ventilkörperabschnitt (3) besitzt eine der Aufnahmebohrung (11) mit Hinterschneidung (14) angepaßte Form unter Belassung eines umlaufenden Spaltes (18) gleicher Breite zu dieser;
in den Spalt (18) zwischen der Aufnahmebohrung (11) und dem Ventilkörperabschnitt (3) ist eine diese füllende, in den Bereich der Hinterschneidung (14) eingreifende Hülse (20) eingepreßt.

2. Formschlüssige Verbindung nach Anspruch 1, dadurch gekennzeichnet, daß die Hinterschneidung (14) Kegelform mit einem Kegelwinkel bis 60°, vorzugsweise 5° bis 30°, hat.

3. Formschlüssige Verbindung nach Anspruch 1, dadurch gekennzeichnet, daß die Hülse (20) aus metallischem Werkstoff, vorzugsweise Stahl, besteht.

4. Formschlüssige Verbindung nach Anspruch 1 oder 3, dadurch gekennzeichnet, daß die Hülse (20) aus Bandmaterial gerollt ist.

5. Formschlüssige Verbindung nach Anspruch 1, dadurch gekennzeichnet, daß die Hülse (20) über eine die Aufnahmebohrung (11) begrenzende Stirnfläche (20) des Gehäuseblocks (10) vorsteht.

6. Formschlüssige Verbindung nach Anspruch 5, dadurch gekennzeichnet, daß die Hülse (20) an ihrem über die Stirnfläche (12) des Gehäuseblocks (10) vorstehenden Abschnitt (22) für den Angriff eines Ausziehwerkzeugs vorbereitet ist.

7. Verfahren zum Herstellen einer formschlüssigen Verbindung zwischen einem Magnetventil (1) und einem Gehäuseblock (10) mit einer Aufnahmebohrung (11) für das Magnetventil (1) unter Verwendung eines Verbindungsmittels, dadurch gekennzeichnet daß man die Aufnahmebohrung (11) des Gehäuseblocks (10) angrenzend an einen zylindrischen Bohrungsabschnitt (13) mit zunehmender Bohrungstiefe mit einer Hinterschneidung (14) versieht, dem Magnetventil (1) eine der Aufnahmebohrung (11) mit Hinterschneidung (14) angepaßte Form unter Belassung eines umlaufenden Spaltes (18) gleicher Breite zu dieser gibt,
das Magnetventil (1) in die Aufnahmebohrung (11) des Gehäuseblocks (10) unter axialer Abstützung einfügt,
daß man als Verbindungsmittel eine Hülse (20) mit der Spaltbreite entsprechender Wanddicke über das Magnetventil (1) streift,
und daß man die Hülse (20) in den Spalt (18) zwischen der Aufnahmebohrung (11) des Gehäuseblocks (10) und dem Magnetventil (1) so tief einpreßt, daß die Hülse (20) den Spalt (18) füllt und in den Bereich der Hinterschneidung (14) eingreift.

## Claims

1. Positively locking connection for joining a solenoid valve (1) to a casing block (10), having a receiving bore (11) for a valve body section (3) which is axially and radially fixed in the said receiving bore, the greatest diameter of the valve body section (3) being less than the aperture diameter of the receiving bore (11), characterized by the features:
the receiving bore (11) passes, adjacently to a cylindrical bore section (13), with increasing bore depth into an undercut (14);
the valve body section (3) possesses a shape which is matched to the receiving bore (11) with undercut (14), leaving a circumferential gap (18) of identical width thereto;
into the gap (18) between the receiving bore (11) and the valve body section (3) there is pressed a sleeve (20), which fills the said receiving bore and reaches into the region of the undercut (14).

2. Positively locking connection according to Claim 1, characterized in that the undercut (14) has a conical shape with a cone angle of up to 60°, preferably 5° to 30°.

3. Positively locking connection according to Claim 1, characterized in that the sleeve (20) consists of metallic material, preferably steel.

4. Positively locking connection according to Claim 1 or 3, characterized in that the sleeve (20) is rolled out of strip material.

5. Positively locking connection according to Claim 1, characterized in that the sleeve (20) protrudes over an end face (12) of the casing block (10), which end face delimits the receiving bore (11).

6. Positively locking connection according to Claim 5, characterized in that the sleeve (20), at its section (22) protruding over the end face (12) of the casing block (10), is prepared for the action of a pull-out tool.

7. Process for creating a positively locking connection for joining a solenoid valve (1) and a casing block (10) to a receiving bore (11) for the solenoid valve (1), using a connecting means, characterized in that the receiving bore (11) of the casing block (10), adjacently to a cylindrical bore section (13), is provided with increasing bore depth with an undercut (14), the solenoid valve (1) is given a shape matched to the receiving bore (11) with undercut (14), leaving a circumferential gap (18) of identical width thereto, and
the solenoid valve (1) is inserted, axially supported, into the receiving bore (11) of the casing block (10),
in that, as connecting means, a sleeve (20) having a wall thickness equivalent to the gap width is swept over the solenoid valve (1),
and in that the sleeve (20) is pressed deeply enough into the gap (18) between the receiving bore (11) of the casing block (10) and the solenoid valve (1) that the sleeve (20) fills the gap (18) and reaches into the region of the undercut (14).

## Revendications

1. Liaison par la forme d'une électrovanne (1) et d'un bloc-carter (10) dans un perçage de réception (11) pour une partie (3) du corps de vanne destinée à être bloquée axialement et radialement dans ce perçage, le plus grand diamètre de la partie (3) étant inférieur au diamètre d'ouverture du perçage de réception (11), caractérisée en ce que :
- le perçage de réception (11) se poursuit de façon adjacente à sa partie de perçage cylindrique (13) par une partie en contre-dépouille (14) plus profonde,
- la partie (3) du corps de l'électrovanne présente une forme adaptée à la partie en contre-dépouille (14) du perçage (11) en laissant un intervalle périphérique (18) de largeur constante,
- l'intervalle (18) entre le perçage de réception (11) et la partie (3) du corps de l'électrovanne reçoit une douille (20) pressée dans la partie au niveau de la contre-dépouille (14) et remplissant cet intervalle.

2. Liaison par la forme selon la revendication 1, caractérisée en ce que la partie en contre-dépouille a une forme conique avec une conicité allant jusqu'à 60° et compris de préférence entre 5° et 30°.

3. Liaison par la forme selon la revendication 1, caractérisée en ce que la douille (1) est en métal notamment en acier.

4. Liaison par la forme selon la revendication 1, caractérisée en ce que la douille (20) est une matière en ruban, enroulé.

5. Liaison par la forme selon la revendication 1, caractérisé en ce que la douille (20) dépasse de la face (20) du bloc-carter (10) entourant le perçage de réception (11).

6. Liaison par la forme selon la revendication 5, caractérisée en ce que la douille (20) présente un segment (22) dépassant de la surface (12) du bloc-carter (10) pour la prise d'un outil d'extraction.

7. Procédé de réalisation d'une liaison par la forme entre une électrovanne (1) et un bloc-carter (10) muni d'un perçage de réception (11) pour l'électrovanne (1) en utilisant un moyen de liaison, caractérisé en ce que :
- le perçage de réception (11) du bloc-carter (10) d'une partie en contre-dépouille (14) adjacente et plus profonde que le segment de perçage (13) cylindrique, on donne à l'électrovanne (1) une forme adaptée à celle du perçage de réception (11) avec la partie en contre-dépouille (14), en laissant un intervalle périphérique (18) de largeur constante,
- on introduit l'électrovanne (1) dans le perçage de réception (11) du bloc-carter (10) en appuyant axialement,
- comme moyen de liaison on emmanche sur l'électrovanne (1) une douille (20) d'épaisseur de paroi correspondant à la largeur de l'intervalle, et
- on enfonce la douille (20) dans l'intervalle (18) entre le perçage de réception (11) du bloc-carter (10) et l'électrovanne (1) suffisamment pour que la douille (20) remplisse l'intervalle (18) et arrive dans la zone de la partie en contre-dépouille (14).
